# EUROPÄISCHE PATENTSCHRIFT

(11) **EP 0 995 579 B1**
(45) Veröffentlichungstag und Bekanntmachung des Hinweises auf die Patenterteilung: **19.03.2003**
(21) Anmeldenummer: 99118490.4
(22) Anmeldetag: 18.09.1999
(51) Int. Cl.: B29C 47/06, B29C 47/12, B29C 57/08

(54) **Verfahren zur fortlaufenden Herstellung eines Verbundrohres mit einer Rohr-Muffe und Vorrichtung zur Durchführung des Verfahrens**
Method for continuous production of a composite pipe with socket and apparatus for carrying out the method
Procédé de production en continu d'un tube composite avec manchon, et appareil pour la mise en oeuvre du procédé

(30) Priorität: 21.10.1998 DE 19848470
(43) Veröffentlichungstag der Anmeldung: 26.04.2000
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- EP-A- 0 385 465
- EP-A- 0 563 575
- US-A- 4 865 797
- US-A- 5 700 493

## Beschreibung

Die Erfindung betrifft ein Verfahren nach dem Oberbegriff des Anspruches 1 und eine Vorrichtung nach dem Oberbegriff des Anspruches 7.

Aus der EP 0 563 575 B 1 (entsprechend US-PS 5,320,797) sind ein derartiges Verfahren und eine derartige Vorrichtung bekannt. Hierbei werden während der Aufweitung des Außen-Schlauches und des Innen-Schlauches zur Rohr-Muffe der Außen-Schlauch und Innen-Schlauch dadurch dickwandiger extrudiert als während der Herstellung des mit Querrillen versehenen Verbundrohres, daß die Vorlaufgeschwindigkeit der sich auf der Formstrecke befindenden, zu Kokillen zusammengefaßten Halbkokillen reduziert wird.

Aus der EP 0 385 465 A2 ist es bekannt, ein Verbundrohr aus einem gewellten Außen-Schlauch und einem zylindrisch glatten Innen-Schlauch herzustellen, die im Bereich der Wellentäler miteinander verschweißt werden. Im Bereich des Spitzendes sind Innen-Schlauch und Außen-Schlauch vollflächig miteinander verschweißt. Um derartige Rohre mit standardisierten Steinzeugrohren verbinden zu können, wird der das spitze Ende bildende glattzylindrische Abschnitt verdickt, wozu die Extrudergeschwindigkeit des äußeren Rohres verändert wird. Zur Herstellung von Muffen werden diese glattzylindrischen Abschnitte nachträglich aufgeweitet.

Die Reduktion der Abzugsgeschwindigkeit, d.h. der Geschwindigkeit, mit der Innen-Schlauch und Außen-Schlauch vom Extruder abgezogen werden, führt nicht immer zu den gewünschten Ergebnissen. Durch den konstruktiv bedingten Abstand von Innen-Düse und Außen-Düse führt eine Beschleunigung oder Verzögerung der Kokillen dazu, daß die gewünschten Wanddicken-Änderungen an in Förderrichtung unterschiedlichen Stellen des Verbundrohres auftreten. Dies ist für den Herstellungsprozeß störend und wirkt sich auch auf das Verbundrohr, und zwar insbesondere im Bereich der Rohr-Muffe negativ aus. Des weiteren ist festzustellen, daß aufgrund der überwiegend glatten Muffen-Geometrie der Schmelzestrom für den Außenschlauch im Muffen-Bereich zu einer erhöhten Wanddicke im Vergleich zu dem mit Querrillen versehenen Bereich führt. Für den Innen-Schlauch gilt im Gegenteil, daß dieser im Bereich der Rohr-Muffe über den Außen-Durchmesser des Verbundrohres hinaus gereckt werden muß. Die vorstehend geschilderten Fakten führen bei manchen Werkstoffen, RohrDurchmessern und Wanddicken zu erheblichen Nachteilen beim Formgebungsprozeß.

Der Erfindung liegt daher die Aufgabe zugrunde, das Verfahren der gattungsgemäßen Art so auszugestalten, daß Innen-Schlauch und Außen-Schlauch bei der Herstellung der Rohr-Muffe jeweils die gewünschte Wanddicke aufweisen, und eine Vorrichtung zur Durchführung des Verfahrens anzugeben.

Diese Aufgabe wird erfindungsgemäß bei einem Verfahren der gattungsgemäßen Art durch die Merkmale im Kennzeichnungsteil des Anspruches 1 gelöst. Dadurch, daß mindestens ein Schmelzestrom, d.h. das Schmelzevolumen pro Zeiteinheit, also bei konstanter Temperatur auch die Schmelzmenge pro Zeiteinheit, also der Massestrom, verändert werden kann, ist eine Optimierung der Wanddicken von Innen-Schlauch und Außen-Schlauch über den Verlauf der Rohr-Muffe ohne weiteres erreichbar. Hierbei wird in der Regel der Schmelzestrom für den Außen-Schlauch während der Erzeugung der Rohr-Muffe beibehalten oder reduziert und der Schmelzestrom für den Innen-Schlauch erhöht, um eine ausreichende Wanddicke für das Recken des Innen-Schlauches am Anfang der Verbindungs-Muffe verfügbar zu haben. Es ist bei dem erfindungsgemäßen Verfahren ohne weiteres möglich, eine entsprechende Schmelzestrom-Kurve durch eine entsprechende Ansteuerung zu fahren.

Eine zur Durchführung des Verfahrens geeignete Vorrichtung wird durch die Merkmale im Kennzeichnungsteil des Anspruches 7 beschrieben.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine im wesentlichen aus zwei Extrudern, einer Formmaschine und einer Nachkühlvorrichtung bestehende Anlage zur Herstellung von Verbundrohren mit Rohr-Muffen in Draufsicht in schematischer Darstellung,
- Fig. 2: einen Spritzkopf und das Einlaufende der Formmaschine im Horizontalschnitt,
- Fig. 3 bis 5: einen vertikalen Teil-Längsschnitt durch die Formmaschine in verschiedenen Positionen einer Muffen-Ausnehmung relativ zum Spritzkopf während der Herstellung einer Rohr-Muffe und
- Fig. 6: ein auf der Anlage hergestelltes Verbundrohr mit Rohr-Muffe.

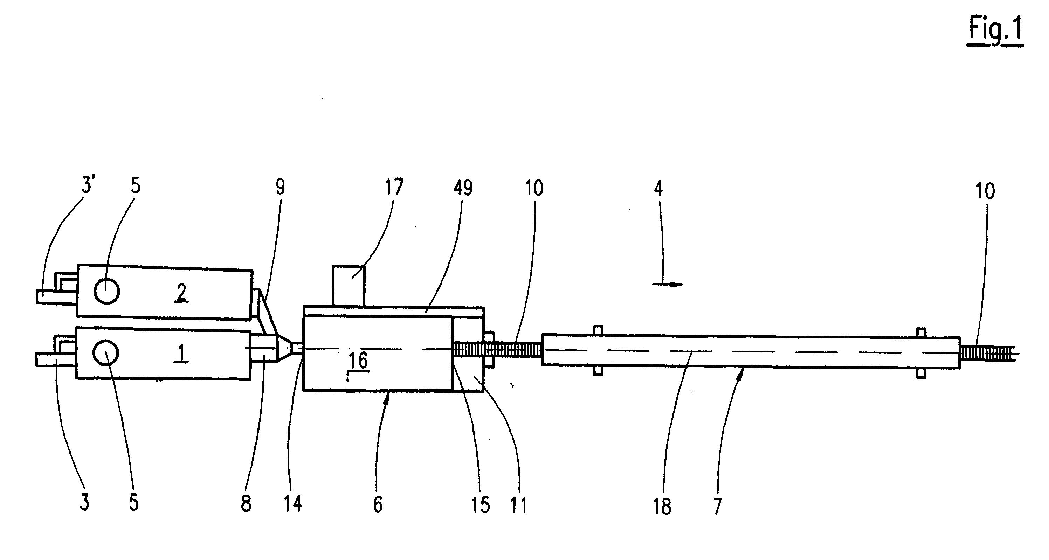

Die in Fig. 1 dargestellte Anlage zur Herstellung von Verbundrohren weist zwei Extruder 1, 2 auf. Diese werden jeweils von einem drehzahlregelbaren

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage -stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, daß jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der einerseits über ein Ventil an eine Druckgasquelle zum Einblasen von sogenannter Zwischenluft oder andererseits an Atmosphäre oder an ein Teil-Vakuum anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Leitungen 27, 28, 29 sind durch einen konzentrisch zur Achse 18 im Spritzkopf 8 ausgebildeten, etwa rohrförmigen Versorgungskanal 31 geführt.

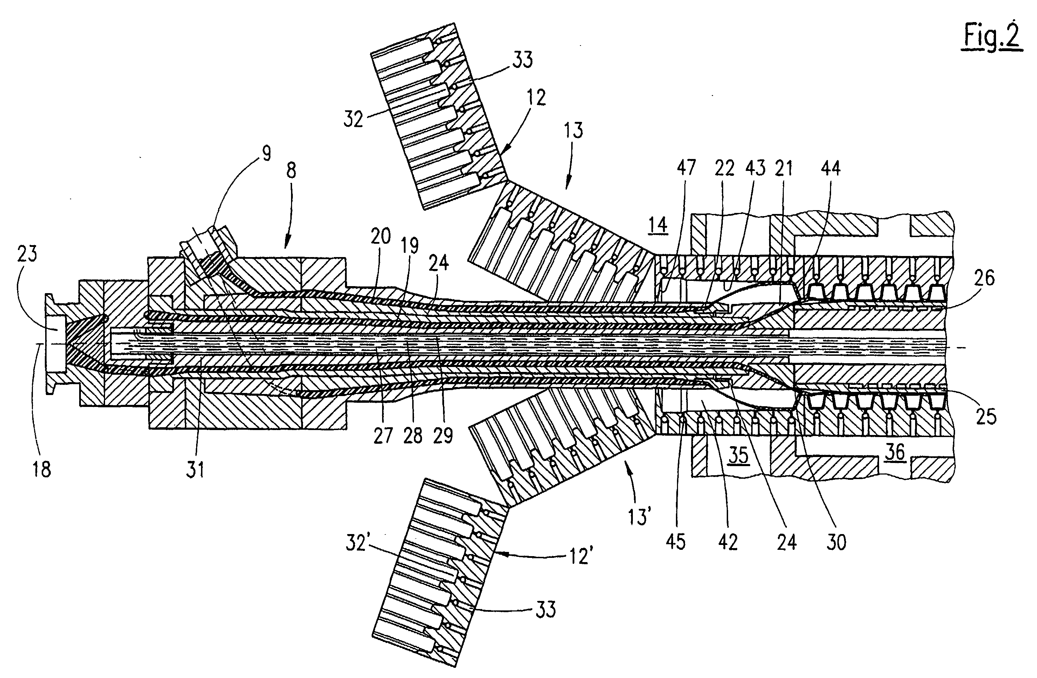

Die Halbkokillen 12, 12' weisen ringförmige Formausnehmungen 32 auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so daß die Formausnehmungen 32 mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch unter Formung eines mit Querrillen 38 versehenen Schlauchs in die Formausnehmungen 32. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

Wie insbesondere aus den Figuren 2, 3, 4 ersichtlich ist, sind die Halbkokillen 12, 12' so ausgebildet, daß jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine im wesentlichen zylindrische Muffen-Ausnehmung 42 ausgebildet, die also eine im wesentlichen glatte, zylindrische Wand 43 aufweist. Zwischen der Wand 43 der Muffen-Ausnehmung 42 und der in Förderrichtung 4 voreilenden Formausnehmung 32 ist ein Übergangsabschnitt 44 ausgebildet. An das - in Förderrichtung 4 - nacheilende Ende der Wand 43 der Muffen-Ausnehmung 42 schließt sich ein kegelstumpfförmiger Formabschnitt 45 an, in dem ein sich nach außen erweiterndes Einführende 46 der Muffe 41 ausgeformt wird. Daran schließt sich wiederum ein Übergangsabschnitt 47 an, der zur nächsten - in Förderrichtung 4 nacheilenden - Formausnehmung 32 führt.

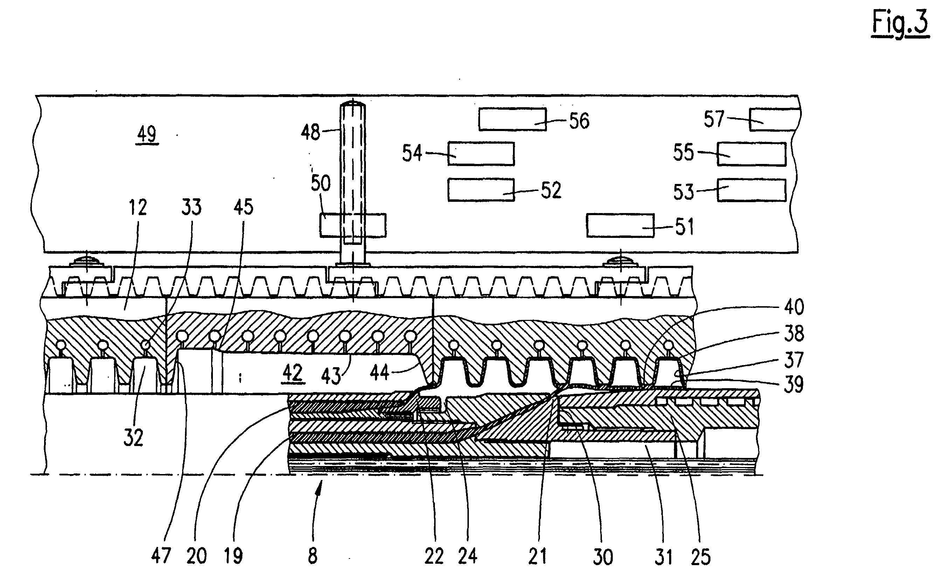

In einer räumlich festen Zuordnung zu der Muffen-Ausnehmung 42 ist ein stabförmiges Schaltglied 48 mit der entsprechenden Halbkokille 12 verbunden, das in noch zu schildernder Weise Schalter betätigt, mittels derer die Drehzahl und damit die Extrudiergeschwindigkeit der Extruder 1, 2 verändert wird, und mittels derer der Gaskanal 24 bzw. der Gasspalt 30 versorgt werden. Hierzu ist an der Formmaschine 6 ein Haltearm 49 angebracht, der sich oberhalb der Halbkokillen 12, 12' in Förderrichtung 4 erstreckt. An diesem Haltearm 49 sind von dem Schaltglied 48 zu betätigende Schalter 50 bis 57 angebracht. Diese Schalter 50 bis 57 werden - wie aus Fig. 3 bis 5 hervorgeht, betätigt. Die Schalter 50 bis 57 sind jeweils paarweise in Förderrichtung hintereinander angeordnet. Die Schalter 50, 51 dienen zur Veränderung der Drehzahl des Extruders 2, der die Kunststoff-Schmelze zur Herstellung des Außen-Schlauches 37 liefert. Die Schalter 52, 53 dienen zur Ansteuerung der sogenannten Zwischenluft, die aus dem Gaskanal 24 strömt, bzw. zur Entlüftung über diesen Gaskanal 24. Die Schalter 54, 55 dienen zur Ansteuerung der aus dem Gasspalt 30 am Kalibrierdorn 25 strömenden Luft. Die Schalter 56, 57 dienen schließlich zur Änderung der Drehzahl und damit der Extrudiergeschwindigkeit des Extruders 1, der die Kunststoff-Schmelze zur Erzeugung des Innen-Schlauches 39 liefert. Die Schalter 50 bis 57 werden betätigt, wenn das Schaltglied 48 jeweils die Mitte des Schalters 50 bis 57 erreicht hat.

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird ein geringer Überdruck von 0,05 bis 0,15 bar über Atmosphärendruck auf den Gasspalt 30 gegeben. Gleichzeitig wird auf den Gaskanal 24 ein ebenfalls geringer, aber höherer Überdruck von 0,2 bis 0,3 bar, ebenfalls gegenüber Atmosphäre gemessen, gegeben. Durch den geringen Überdruck innerhalb des Innen-Schlauches 39 wird verhindert, daß der Innen-Schlauch 39 an dem Kalibrierdorn 25 festklebt, bevor er mit dem Außen-Schlauch 37 verschweißt wird. Durch den etwas höheren Überdruck zwischen Außen-Schlauch 37 und Innen-Schlauch 39 wird sichergestellt, daß beim Abkühlen der an den Wellentälern 40 miteinander verschweißten Schläuche 37, 39 zum gewellten Verbundrohr 10 der Innen-Schlauch 39 nicht nach außen ausgewölbt wird. Beim Abkühlen der Schläuche 37, 39 stellt sich zwischen diesen exakt Atmosphärendruck ein. Während dieser Herstellung des normalen gewellten Verbundrohres 10 laufen die Extruder 1, 2 mit einer vorgegebenen Drehzahl, d.h. sie extrudieren jeweils einen konstanten Massestrom an Kunststoff-Schmelze pro Zeiteinheit.

Wenn in dem in Fig. 3 dargestellten Augenblick der Übergangsabschnitt 44 in den Bereich der Außen-Düse 22 kommt, gelangt das Schaltglied 48 zum - in Förderrichtung 4 gesehen - ersten Schalter 50, durch dessen Betätigung der Antriebsmotor 3' des Extruders 2 in seiner Drehzahl herabgesetzt wird, so daß die Extrudiergeschwindigkeit, d.h. der Massestrom an Kunststoff-Schmelze pro Zeiteinheit, reduziert wird. Durch die Reduktion der Drehzahl des Extruders 2 wird bewirkt, daß der sich an den Übergangsabschnitt 44 und die Wand 43 der Muffen-Ausnehmung 42 anlegende Außen-Schlauch 37 pro Längeneinheit des Verbundrohres 10 weniger Kunststoff enthält als in dem Bereich des normalen gewellten Verbundrohres 10, in dem aus ihm ein Außenrohr 37' mit Querrillen 38 geformt wird.

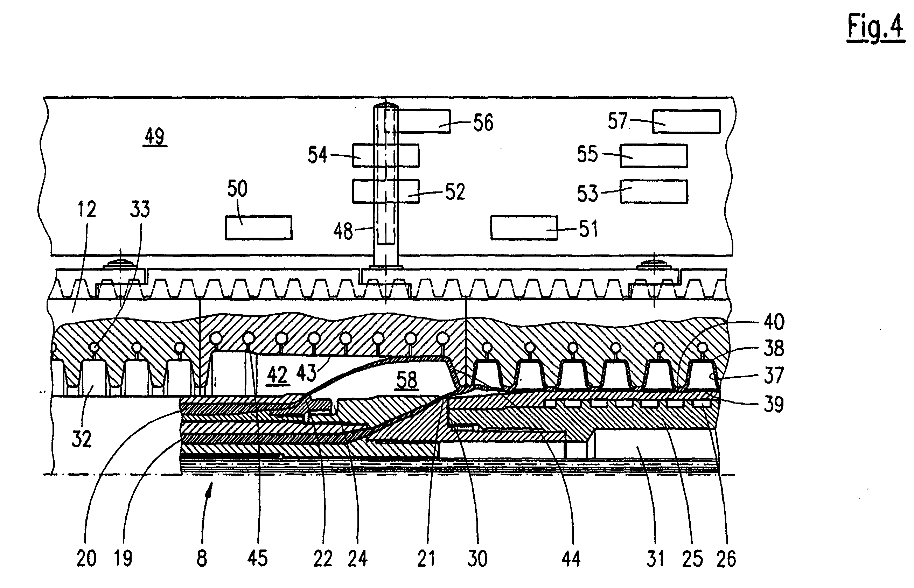

Wenn - entsprechend der Darstellung in Fig. 4 - der Übergangsabschnitt 44 die Innen-Düse 21 erreicht, gelangt das Schaltglied 48 zu den Schaltern 52 und 54. Durch deren Betätigung wird erreicht, daß der Überdruck der aus dem Gasspalt 30 austretenden Luft z.B. auf einen Überdruck von ca. 0,2 bis 0,45 bar erhöht wird. Gleichzeitig wird durch Betätigung des Schalters 54 der Überdruck von dem Gaskanal 24 genommen und dieser an eine Vakuum-Quelle oder Atmosphäre geschaltet, so daß der Zwischenraum 58 zwischen Innen-Schlauch 39 und Außen-Schlauch 37 im Bereich der Muffen-Ausnehmung 42 entlüftet wird, so daß der Innen-Schlauch 39 nach außen gegen den Außen-Schlauch 37 gedrückt wird. Kurz danach, und zwar wenn das Schaltglied 48 den Schalter 56 erreicht hat, wenn nämlich der Übergangsabschnitt 44 über die Innen-Düse 21 hinweggefahren ist, dann wird durch Betätigung des Schalters 56 der Antriebsmotor 3 des Extruders 1 in der Weise angesteuert, daß seine Drehzahl erhöht wird, d.h. der pro Zeiteinheit extrudierte Massestrom an Kunststoff-Schmelze wird vergrößert. Der Innen-Schlauch 39 erhält also im Bereich der zu erzeugenden Muffe 41 pro Längeneinheit mehr Kunststoff-Schmelze als im Bereich des normalen gewellten Verbundrohres 10, in dem aus ihm nur das glattwandige Innenrohr 39' geformt wird.

Wenn der Übergangsabschnitt 47 der Muffen-Ausnehmung 42 die Außendüse 22 überfährt, betätigt das Schaltglied 48 den Schalter 51, wodurch die Extrusionsgeschwindigkeit des den Außen-Schlauch 37 liefernden Extruders 2 wieder auf die ursprüngliche Geschwindigkeit erhöht wird. Der Extruder 2 liefert also wieder die Menge Kunststoff-Schmelze pro Zeiteinheit, die zur Erzeugung der Querrillen 38 erforderlich ist.

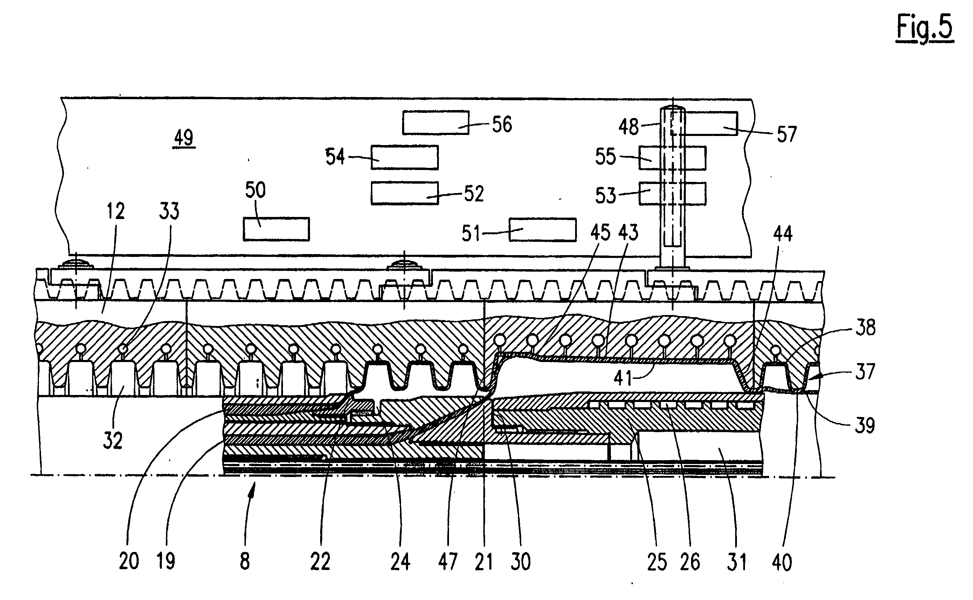

Wenn der Übergangsabschnitt 47 die Innen-Düse 21 erreicht, dann betätigt das Schaltglied 48 entsprechend der Darstellung in Fig. 5 die Schalter 53, 55, wodurch einerseits der Gasdruck am Gasspalt 30 wieder reduziert wird und der Gaskanal 24 mit Druckluft bzw. sogenannter Zwischenluft beaufschlagt wird. Wenn dann der Übergangsabschnitt 47 die Innen-Düse 21 überfahren hat, wird durch Betätigung des Schalters 57 der Antriebsmotor 3 angesteuert und dadurch die Extrusionsgeschwindigkeit des Extruders 1 auf das ursprüngliche Maß zurückgenommen, so daß wieder die für die Erzeugung des glatten Innenrohres 39' erforderliche Menge an Kunststoff-Schmelze pro Zeiteinheit extrudiert wird.

Die Anlage unterscheidet sich im wesentlichen von der in der EP 0 563 575 B1 (entsprechend US-PS 5,320,797) beschriebenen Anlage durch das Vorhandensein von zwei Extrudern 1, 2 und die durch die Schalter 50, 51 und 56, 57 ermöglichte Ansteuerung und Änderung der Kunststoff-Schmelze-Ströme.

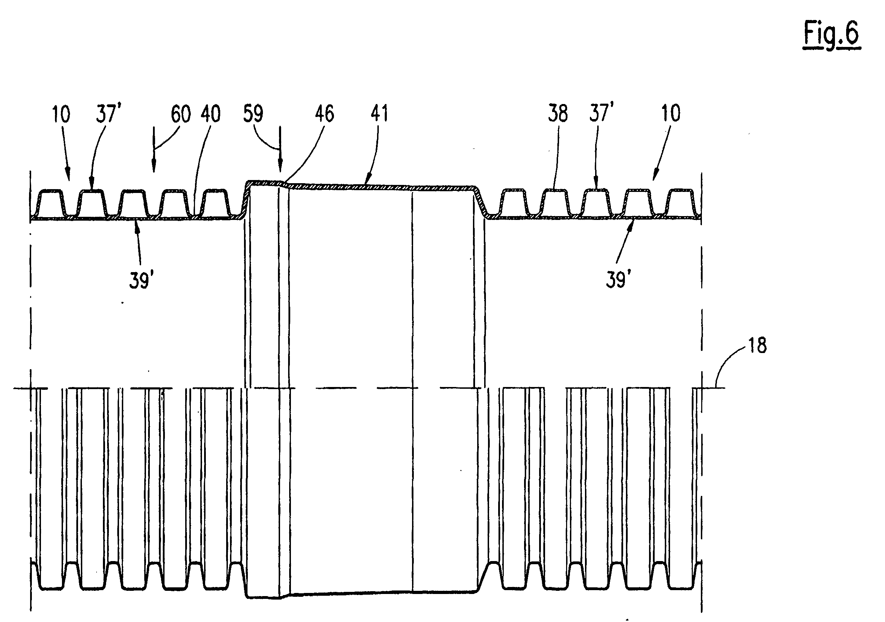

In Fig. 6 ist das fertig extrudierte Verbundrohr dargestellt. Es wird im Anschluß an die Nachkühleinrichtung mittels einer bekannten Schneideinrichtung mittels zweier durch Pfeile angedeuteter Trennschnitte 59, 60 durchtrennt, und zwar wird der Rohrabschnitt zwischen dem Einführende 46 der Rohr-Muffe 41 und einem der nachfolgenden voll ausgebildeten Wellentäler 40 herausgeschnitten.

## Patentansprüche

1. Verfahren zur fortlaufenden Herstellung eines aus einem glatten Innenrohr (39')und einem mit diesem verschweißten, mit Querrillen (38) versehenen Außenrohr (37') bestehenden Verbundrohres (10) mit einer Rohr-Muffe (41) mit folgenden Verfahrensschritten:
- Es wird ein Außen-Schlauch (37) extrudiert,
- der Außen-Schlauch (37) wird durch einen von innen nach außen wirkenden, zumindest teilweise durch ein von außen aufgebrachtes Teil-Vakuum erzeugten relativen Überdruck mit einer Wellung mit Querrillen (38) versehen,
- es wird ein Innen-Schlauch (39) in den Außen-Schlauch (37) extrudiert,
- der Innen-Schlauch (39) wird gegen Wellentäler (40) des Außen-Schlauches (37) gedrückt und dort mit dem Außen-Schlauch (37) verschweißt,
- der Außen-Schlauch (37) wird in vorgegebenen Abständen unter Aufbringung des von innen nach außen wirkenden relativen Überdrucks zu einer im wesentlichen glattwandigen, etwa zylindrischen Rohr-Muffe (41) aufgeweitet,
**dadurch gekennzeichnet,**
**dass** mindestens einer der für die Erzeugung des Außen-Schlauches (37) und des Innen-Schlauches (39) eingesetzten Masseströme pro Zeiteinheit an Kunststoff-Schmelze während der Herstellung der Rohr-Muffe (41) unabhängig von dem anderen Massestrom verändert wird.

2. Verfahren nach Anspruch 1, **dadurch gekennzeichnet,**
**dass** während der Erzeugung der Rohr-Muffe (41) der Massestrom zur Erzeugung des Außen-Schlauches (37) verringert wird.

3. Verfahren nach Anspruch 1 oder 2, **dadurch gekennzeichnet,**
**dass** während der Erzeugung der Rohr-Muffe (41) der Massestrom zur Erzeugung des Innen-Schlauches (39) vergrößert wird.

4. Verfahren nach einem der Ansprüche 1 bis 3, **dadurch gekennzeichnet,**
**dass** nach dem Extrudieren des Innen-Schlauches (39) in den Außen-Schlauch (37) und vor dem Andrücken des Innen-Schlauches (39) gegen die Wellentäler (40) des Außen-Schlauches (37) in den Bereich zwischen Außen-Schlauch (37) und Innen-Schlauch (39) Gas mit einem über Atmosphärendruck liegenden Druck eingeblasen wird.

5. Verfahren nach einem der Ansprüche 1 bis 4 **dadurch gekennzeichnet,**
**dass** während des Aufweitens des Außen-Schlauches (37) und des Innen-Schlauches (39) zu einer Rohr-Muffe (41) der Zwischenraum (58) zwischen dem Außen-Schlauch (37) und dem Innen-Schlauch (39) entlüftet wird.

6. Verfahren nach einem der Ansprüche 1 bis 5 **dadurch gekennzeichnet,**
**dass** der Innen-Schlauch (39) während des Aufweitens zur Rohr-Muffe (41) von innen mit Gas mit einem Druck über Atmosphärendruck beaufschlagt und im wesentlichen vollflächig gegen den Außen-Schlauch (37) gedrückt wird.

7. Vorrichtung zur Durchführung des Verfahrens nach einem der Ansprüche 1 bis 6
- wobei mit ringförmigen Formausnehmungen (32) versehene, sich auf einer Formstrecke (16) jeweils paarweise zu einer Form mit einer Mittel-Längs-Achse (18) ergänzende Halbkokillen (12, 12') auf einem Maschinentisch (11) im Kreislauf und in Förderrichtung (4) geführt angeordnet sind,
- wobei mindestens ein Paar Halbkokillen (12, 12') mit einer Muffen-Ausnehmung (42) versehen ist,
- wobei Einrichtungen zur Erzeugung eines von innen nach außen wirkenden relativen Überdrucks vorgesehen sind, wozu die Formausnehmungen (32) an in den Halbkokillen (12, 12') ausgebildete Teil-Vakuum-Kanäle (33) angeschlossen sind,
- wobei der Formstrecke (16) ein Spritzkopf (8) eines ersten Extruders (1) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) stromabwärts liegenden Ende mit einem Kalibrierdorn (25) versehen ist, und
- wobei die Innen-Düse (21) mit dem ersten Extruder (1) verbunden ist,
**dadurch gekennzeichnet,**
**dass** ein zweiter Extruder (2) vorgesehen ist,
**dass** der zweite Extruder (2) mit der Außen-Düse (22) verbunden ist,
**dass** die Extrusionsgeschwindigkeit mindestens eines Extruders (1, 2) veränderbar ist, und
**dass** Schalter (50, 51, 56, 57) zur Veränderung der Extrusionsgeschwindigkeit des mindestens einen Extruders (1,2), während die Muffen-Ausnehmung (42) sich über eine der Düsen (21, 22) bewegt, vorgesehen sind.

8. Vorrichtung nach Anspruch 7, **dadurch gekennzeichnet,**
**dass** die Extrusionsgeschwindigkeit des ersten Extruders (1) unabhängig von der Extrusionsgeschwindigkeit des zweiten Extruders (2) veränderbar ist, und
**dass** Schalter (50, 51) zur Reduzierung der Extrusionsgeschwindigkeit des zweiten Extruders (2), während die Muffen-Ausnehmung (42) sich über die Außen-Düse (22) bewegt, vorgesehen sind.

9. Vorrichtung nach Anspruch 7 oder 8, **dadurch gekennzeichnet,**
**dass** die Extrusionsgeschwindigkeit des zweiten Extruders (2) unabhängig von der Extrusionsgeschwindigkeit des ersten Extruders (1) veränderbar ist, und
**dass** Schalter (56, 57) zur Erhöhung der Extrusionsgeschwindigkeit des ersten Extruders (1), während die Muffen-Ausnehmung (42) sich über die Innen-Düse (21) bewegt, vorgesehen sind.

10. Vorrichtung nach einem der Ansprüche 7 bis 9, **dadurch gekennzeichnet,**
**dass** zwischen Außen-Düse (22) und Innen-Düse (21) aus dem Spritzkopf (8) mindestens ein Gaskanal (24) ausmündet, und
**dass** Schalter (52, 53) vorgesehen sind, mittels derer der Gaskanal (24) mit Druckluft beaufschlagt oder entlüftet wird.

11. Vorrichtung nach einem der Ansprüche 7 bis 10, **dadurch gekennzeichnet,**
**dass** zwischen Innen-Düse (21) und Kalibrierdorn (25) ein zusätzlicher Gaskanal (30) ausmündet, und
**dass** Schalter (54, 55) zur Beaufschlagung des zusätzlichen Gaskanals (30) mit Druckluft unterschiedlichen Drucks vorgesehen sind.

12. Vorrichtung nach einem der Ansprüche 7 bis 11, **dadurch gekennzeichnet,**
**dass** die Schalter (50 bis 57) in Abhängigkeit von der Stellung der Muffen-Ausnehmung (42) zum Spritzkopf (8) betätigbar sind.

## Claims

1. A method for the continuous manufacture of a twin-wall pipe (10) having a pipe socket (41) and consisting of a smooth internal tube (39') and an external tube (37'), which is welded together therewith and provided with transverse grooves (38), comprising the following method steps:
- an external tube (37) is extruded;
- the external tube (37) is provided with a corrugation of transverse grooves (38) by relative overpressure being generated at least partially by a partial vacuum applied from the outside and acting from the inside to the outside;
- an internal tube (39) is extruded into the external tube (37);
- the internal tube (39) is pressed against the corrugation troughs (40) of the external tube (37), where it is welded together with the external tube (37);
- the external tube (37) is expanded at given intervals and by the application of the relative overpressure acting from the inside to the outside to form a substantially smooth-walled, approximately cylindrical pipe socket (41 );
**characterized**
**in that** at least one of the mass flows of melt of plastic material per unit of time used for the production of the external tube (37) and the internal tube (39) is modified independently of the other mass flow during the production of the pipe socket (41).

2. A method according to claim 1, **characterized**
**in that** the mass flow for the production of the external tube (37) is reduced during the production of the pipe socket (41).

3. A method according to claim 1 or 2, **characterized**
**in that** the mass flow for the production of the internal tube (39) is augmented during the production of the pipe socket (41).

4. A method according to one of claims 1 to 3, **characterized**
**in that** after the internal tube (39) has been extruded into the external tube (37) and before the internal tube (39) is pressed against the corrugation troughs (40) of the external tube (37), gas at a pressure above atmospheric is blown into the area between the external tube (37) and the internal tube (39).

5. A method according to one of claims 1 to 4, **characterized**
**in that** the space (58) between the outer tube (37) and the inner tube (39) is vented while the outer tube (37) and the inner tube (39) are expanded to form a pipe socket (41).

6. A method according to one of claims 1 to 5, **characterized**
**in that** the internal tube (39), when expanded to form a pipe socket (41), is actuated from within by gas at a pressure above atmospheric and is pressed substantially over its full surface against the external tube (37).

7. An apparatus for putting into practice the method according to one of claims 1 to 6,
- half shells (12, 12') being arranged on a machine bed (11) for circulation and guidance in the conveying direction (4), which are provided with annular mold recesses (32) and which combine in pairs on a molding path (16) to form a mold with a central longitudinal axis (18);
- at least one pair of half shells (12, 12') being provided with a socket recess (42);
- means being provided for the production of relative overpressure acting from the inside to the outside, wherefore the mold recesses (32) are connected to partial vacuum channels (33) formed in the half shells (12, 12');
- a crosshead (8) of the first extruder (1) being disposed upstream of the molding path (16);
- the crosshead (8) being provided with an outer die (22) for the extrusion of an external tube (37), and, downstream in the conveying direction (4), with an inner die (21) for the extrusion of an internal tube (39), and, at its downstream end in the conveying direction (4), with a calibrating mandrel (25); and
- the inner die (21) being connected to the first extruder (1);
**characterized**
**in that** a second extruder is provided;
**in that** the second extruder (2) is connected to the outer die (22);
**in that** the extrusion rate of at least one extruder (1, 2) is modifiable; and
**in that** switches (50, 51, 56, 57) are provided for the modification of the extrusion rate of the at least one extruder (1,2) while the socket recess (42) moves over one of the dies (21, 22).

8. An apparatus according to claim 7, **characterized**
**in that** the extrusion rate of the first extruder (1) is modifiable independently of the extrusion rate of the second extruder (2), and
**in that** switches (50, 51) are provided for the reduction of the extrusion rate of the second extruder (2) while the socket recess (42) moves over the outer die (22).

9. An apparatus according to claim 7 or 8, **characterized**
**in that** the extrusion rate of the second extruder (2) is modifiable independently of the extrusion rate of the first extruder (1), and
**in that** switches (56, 57) are provided for the augmentation of the extrusion rate of the first extruder (1) while the socket recess (42) moves over the inner die (21).

10. An apparatus according to one of claims 7 to 9, **characterized**
**in that** at least one gas duct (24) discharges from the crosshead (8) between the outer die (22) and the inner die (21), and
**in that** switches (52, 53) are provided, by means of which the gas duct (24) is actuated by compressed air or vented.

11. An apparatus according to one of claim 7 to 10, **characterized**
**in that** an additional gas duct (30) discharges between the inner die (21) and the calibrating mandrel (25), and
**in that** switches (54, 55) are provided for the actuation of the additional gas duct (30) by compressed air of varying pressure.

12. An apparatus according to one of claims 7 to 11, **characterized**
**in that** the switches (50 to 57) are operatable in dependence on the position of the socket recess (42) relative to the crosshead (8).

## Revendications

1. Procédé destiné à la fabrication continue d'un tube composite (10) à manchon (41) de tube, constitué d'un tube intérieur (39') lisse et d'un tube extérieur (37') muni de cannelures transversales (38) soudé à ce dernier, comportant les phases de procédé suivantes :
- un tuyau extérieur (37) est extrudé,
- le tuyau extérieur (37) est muni d'une ondulation à cannelures transversales (38) par une surpression relative agissant de l'intérieur vers l'extérieur qui est engendrée, au moins partiellement, par un vide partiel appliqué à partir de l'extérieur,
- un tuyau intérieur (39) est extrudé dans le tuyau extérieur (37),
- le tuyau intérieur (39) est repoussé contre des creux d'ondes (40) du tuyau extérieur (37), et est soudé à ce niveau au tuyau extérieur (37),
- le tuyau extérieur (37) est expansé à intervalles prédéterminés en un manchon (41) de tube à paroi sensiblement lisse, approximativement cylindrique, par l'application de la surpression relative agissant de l'intérieur vers l'extérieur,
**caractérisé en ce que,**
pendant la fabrication du manchon (41) de tube, l'un au moins des débits massiques par unité de temps de masse de matière plastique fondue utilisés pour la fabrication du tuyau extérieur (37) et du tuyau intérieur (39) est modifié indépendamment de l'autre débit massique.

2. Procédé selon la revendication 1, **caractérisé en ce que,** pendant la fabrication du manchon (41) de tube, le débit massique est réduit pour la fabrication du tuyau extérieur (37).

3. Procédé selon la revendication 1 ou 2, **caractérisé en ce que,** pendant la fabrication du manchon (41) de tube, le débit massique est augmenté pour la fabrication du tuyau intérieur (39).

4. Procédé selon l'une quelconque des revendications 1 à 3, **caractérisé en ce que,** après l'extrusion du tuyau intérieur (39) dans le tuyau extérieur (37), et avant l'application du tuyau intérieur (39) contre les creux d'ondes (40) du tuyau extérieur (37), du gaz est soufflé à une pression supérieure à la pression atmosphérique dans la zone située entre le tuyau extérieur (37) et le tuyau intérieur (39).

5. Procédé selon l'une quelconque des revendications 1 à 4, **caractérisé en ce que,** pendant l'expansion du tuyau extérieur (37) et du tuyau intérieur (39) en un manchon (41) de tube, l'espace intermédiaire (58) entre le tuyau extérieur (37) et le tuyau intérieur (39) est purgé.

6. Procédé selon l'une quelconque des revendications 1 à 5, **caractérisé en ce que,** pendant l'expansion en un manchon (41) de tube, le tuyau intérieur (39) est alimenté à partir de l'intérieur par un gaz ayant une pression supérieure à la pression atmosphérique, et est appliqué sensiblement sur toute sa surface contre le tuyau extérieur (37).

7. Dispositif destiné à la mise en oeuvre du procédé selon l'une quelconque des revendications 1 à 6, dans lequel
- des demi-coquilles (12, 12') munies d'évidements de conformation annulaires (32), se complétant sur une ligne de conformation (16) par couples en une forme comportant un axe médian longitudinal (18), sont disposées sur une table de machine (11), en étant guidées en circuit dans le sens du transport (4),
- un couple au moins de demi-coquilles (12, 12') est muni d'un évidement (42) de manchon,
- des installations sont prévues pour la génération d'une surpression relative agissant de l'intérieur vers l'extérieur, les évidements de conformation (32) étant raccordés à cet effet à des canaux (33) sous vide partiel pratiqués dans les demi-coquilles (12, 12'),
- une tête d'injection (8) d'une première extrudeuse (1) est disposée en amont de la ligne de conformation (16),
- la tête d'injection (8) est munie d'une filière extérieure (22) pour l'extrusion d'un tuyau extérieur (37) et, disposée en aval dans le sens du transport (4), d'une filière intérieure (21) pour l'extrusion d'un tuyau intérieur (39), et comportant un mandrin de calibrage (25) au niveau de son extrémité située en aval dans le sens du transport (4), et
- la filière intérieure (21) est reliée à la première extrudeuse (1),
**caractérisé en ce que**
il est prévu une deuxième extrudeuse (2),
la deuxième extrudeuse (2) est reliée à la filière extérieure (22),
la vitesse d'extrusion de l'une au moins des extrudeuses (1, 2) est modifiable, et
**en ce que** des commutateurs (50, 51, 56, 57) sont prévus pour modifier la vitesse d'extrusion de l'une au moins des extrudeuses (1, 2) pendant que l'évidement (42) de manchon se déplace au-dessus de l'une des filières (21, 22).

8. Dispositif selon la revendication 7, **caractérisé en ce que**
la vitesse d'extrusion de la première extrudeuse (1) peut être modifiée indépendamment de la vitesse d'extrusion de la deuxième extrudeuse (2), et
**en ce que** des commutateurs (50, 51) sont prévus pour la réduction de la vitesse d'extrusion de la deuxième extrudeuse (2) pendant que l'évidement (42) de manchon se déplace au-dessus de la filière extérieure (22) .

9. Dispositif selon la revendication 7 ou 8, **caractérisé en ce que**
la vitesse d'extrusion de la deuxième extrudeuse (2) peut être modifiée indépendamment de la vitesse d'extrusion de la première extrudeuse (1), et
**en ce que** des commutateurs (56, 57) sont prévus pour l'augmentation de la vitesse d'extrusion de la première extrudeuse (1) pendant que l'évidement (42) de manchon se déplace au-dessus de la filière intérieure (21).

10. Dispositif selon l'une quelconque des revendications 7 à 9, **caractérisé en ce que,**
entre la filière extérieure (22) et la filière intérieure (21), au moins un canal de gaz (24) débouche de la tête d'injection (8) vers l'extérieur, et
**en ce qu'**il est prévu des commutateurs (52, 53), au moyen desquels le canal de gaz (24) est alimenté en air comprimé ou purgé.

11. Dispositif selon l'une quelconque des revendications 7 à 10, **caractérisé en ce que**
un canal de gaz supplémentaire (30) débouche entre la filière intérieure (21) et le mandrin de calibrage (25), et
**en ce qu'**il est prévu des commutateurs (54, 55) pour alimenter le canal de gaz supplémentaire (30) en air comprimé à différentes pressions.

12. Dispositif selon l'une quelconque des revendications 7 à 11, **caractérisé en ce que**
les commutateurs (50 à 57) peuvent être actionnés en fonction de la position de l'évidement (42) de manchon par rapport à la tête d'injection (8).
